# EUROPÄISCHE PATENTANMELDUNG

(11) **EP 2 357 812 A2**
(43) Veröffentlichungstag der Anmeldung: **17.08.2011**
(21) Anmeldenummer: 11153489.7
(22) Anmeldetag: 07.02.2011
(51) Int. Cl.: H04N 5/775, H04N 5/76

(54) **Verfahren zum Speichern und Übermitteln von Audiodaten eines Audio- und Videodatenstroms**

(30) Priorität: 09.02.2010 DE 102010007258
(71) Anmelder: Continental Automotive GmbH, 30165 Hannover (DE)
(72) Erfinder: Nau, Dieter, 35578 Wetzlar (DE)

(57) **Zusammenfassung**

Die Erfindung betrifft ein Verfahren zum Speichern und Übermitteln von Audiodaten eines Audio- und Videodatenstroms, wobei das Verfahren folgende Schritte aufweist. Es erfolgt ein Empfangen von Audio- und Videodaten mittels einer Fernseh-Empfangsvorrichtung (1). Zudem erfolgt ein Übermitteln von zumindest Teilen der empfangenen Audio- und Videodaten an eine Verarbeitungs- und Speichervorrichtung (2). Weiterhin erfolgt ein Extrahieren der Audiodaten (18) aus den übermittelten Audio- und Videodaten (17) mittels der Verarbeitungs- und Speichervorrichtung (2) und ein Speichern der extrahierten Audiodaten (18) auf zumindest einem Speicherträger (3) der Verarbeitungs- und Speichervorrichtung (2). Darüber hinaus erfolgt ein Bereitstellen der gespeicherten Audiodaten (18) in zumindest einem Kraftfahrzeug-Informations- und Unterhaltungssystem (4).

## Beschreibung

Verfahren zum Speichern und Übermitteln von Audiodaten eines Audio- und Videodatenstroms

Die Erfindung betrifft ein Verfahren zum Speichern und Übermitteln von Audiodaten eines Audio- und Videodatenstroms.

Aus der DE 10 2004 027 412 A1 ist ein Verfahren zur Übertragung von Text-, Audio- und/oder Videodaten von einem Fahrzeugkommunikationssystem zu einem anderen Kommunikationssystem, beispielsweise einem DVD-Player, bekannt. Bei diesem Verfahren werden die zu übertragenden Daten von dem einen Kommunikationssystem in einen Speicher eines Kraftfahrzeugschlüssels übertragen und von diesem Speicher dann die zwischengespeicherten Daten in das andere Kommunikationssystem übertragen, so dass diese übertragenen Daten in dem anderen Kommunikationssystem wiedergegeben werden können. Mit diesem Verfahren ist ein Übertragen von Text-, Audio- und/oder Videodaten in das Fahrzeugkommunikationssystem ohne ein zusätzliches Übertragungselement möglich.

Bei dem bekannten Verfahren kann der Datentransfer, insbesondere von einem nicht automobilen Kommunikationssystem, beispielsweise einem DVD-Player oder einem Heim-PC, auf den Kraftfahrzeugschlüssel große Datenmengen umfassen. Zudem gibt es Situationen, in denen die gewünschten Daten nicht in einfacher Weise bereitgestellt werden können. Beispielsweise werden häufig für einen Fernsehzuschauer interessante Fernseh-Beiträge im Spätprogramm gesendet. Es kann dabei vorkommen, dass der Fernsehzuschauer im Laufe der Sendung müde wird bzw. zu Bett gehen möchte. Andererseits möchte er aber die Sendung auch gerne zu Ende mitverfolgen. Dazu ist das bekannte Verfahren nicht in einfacher Weise geeignet.

Aufgabe der Erfindung ist es, ein Verfahren zum Speichern und Übermitteln von Audiodaten eines Audio- und Videodatenstroms anzugeben, das es ermöglicht, eine Fernsehsendung, insbesondere einen verbleibenden Teil einer Fernsehsendung, möglichst zeitnah und komfortabel zu Ende zu verfolgen, wobei das Verfahren zudem einen möglichst geringen Bedarf an Speicherplatz benötigt.

Diese Aufgabe wird mit dem Gegenstand des unabhängigen Anspruchs gelöst. Vorteilhafte Weiterbildungen ergeben sich aus den abhängigen Ansprüchen.

Erfindungsgemäß wird ein Verfahren zum Speichern und Übermitteln von Audiodaten eines Audio- und Videodatenstroms bereitgestellt, wobei das Verfahren folgende Schritte aufweist. Es erfolgt ein Empfangen von Audio- und Videodaten mittels einer Fernseh-Empfangsvorrichtung. Zudem erfolgt ein Übermitteln von zumindest Teilen der empfangenen Audio- und Videodaten an eine Verarbeitungs- und Speichervorrichtung. Weiterhin erfolgen ein Extrahieren der Audiodaten aus den übermittelten Audio- und Videodaten mittels der Verarbeitungs- und Speichervorrichtung und ein Speichern der extrahierten Audiodaten auf zumindest einem Speicherträger der Verarbeitungs- und Speichervorrichtung. Darüber hinaus erfolgt ein Bereitstellen der gespeicherten Audiodaten in zumindest einem Kraftfahrzeug-Informations- und Unterhaltungssystem.

Das erfindungsgemäße Verfahren ermöglicht in vorteilhafter Weise, dass die Audiodaten von Fernseh-Beiträgen ganz oder teilweise in dem Kraftfahrzeug-Informations- und Unterhaltungssystem bereitgestellt und somit die Fernseh-Beiträge zu Ende verfolgt werden können. Dabei besitzt das erfindungsgemäße Verfahren durch das Extrahieren der Audiodaten aus den übermittelten Audio- und Videodaten und dem Speichern von lediglich den extrahierten Audiodaten einen verhältnismäßig geringen Speicherplatzbedarf.

Die Erfindung geht dabei von der Überlegung aus, dass es bei vielen Fernseh-Beiträgen nicht notwendig ist, die Sendung tatsächlich zu sehen, da die eigentlichen Informationen aus gesprochenen Worten bestehen. Dies ist beispielsweise bei Diskussionsrunden der Fall. Hier genügt es, die Audiodaten zu verfolgen, um nahezu alle Informationen zu erhalten. Es ist daher möglich, die Sendung während einer Fahrt in einem Kraftfahrzeug durch das Anhören der Audiodaten zu verfolgen. Insbesondere ist es möglich, eine nur teilweise angesehene Sendung zu Ende zu verfolgen, was zu einem früheren Zeitpunkt als am heimischen Fernseher erfolgen kann, beispielsweise auf dem Weg zur Arbeit, falls dieser in dem Kraftfahrzeug zurückgelegt wird. Zu diesem frühen Zeitpunkt nach der Unterbrechung des Betrachtens des ursprünglichen Fernseh-Beitrags ist dem Zuschauer der Inhalt der bis zu der Unterbrechung verfolgten Sendung noch zu einem Großteil präsent, so dass ein Mitverfolgen der Sendung bis zu deren Ende ohne einen merklichen Informationsverlust gewährleistet werden kann.

Der zumindest eine Speicherträger ist dabei bevorzugt wiederbeschreibbar. Dadurch kann der zum Speichern der extrahierten Audiodaten benötigte Speicherplatz nach erfolgtem Verfolgen, insbesondere zu Ende Verfolgen, der Sendung durch Anhören der Audiodaten wieder zur Verfügung gestellt werden.

In einer Ausführungsform beinhaltet der zumindest eine Speicherträger eine Festplatte oder einen EEPROM, insbesondere einen Flash-Speicher.

Die Verarbeitungs- und Speichervorrichtung kann Bestandteil eines Heimunterhaltungs-Systems sein.

In einer Ausführungsform des erfindungsgemäßen Verfahrens werden dabei die gespeicherten Audiodaten von dem Heimunterhaltungs-System an das Kraftfahrzeug-Informations- und Unterhaltungssystem übermittelt. Die Übermittlung kann zumindest teilweise über eine drahtgebundene Verbindung, insbesondere eine LAN-Verbindung, erfolgen. Zusätzlich oder alternativ kann die Übermittlung zumindest teilweise über eine Funkverbindung, insbesondere eine WLAN-Verbindung, erfolgen. Dadurch lassen sich auch verhältnismäßig große Distanzen zwischen dem Heimunterhaltungs-System und dem Kraftfahrzeug-Informations- und Unterhaltungssystem in einfacher Weise überbrücken. Bevorzugt werden die gespeicherten Audiodaten dabei verschlüsselt übermittelt oder es erfolgt ein Verbindungsaufbau über einen sicheren Kanal.

Weiterhin erfolgt im Hinblick auf eine Fehlerausfallsicherheit ("error resilience") bei der Übermittlung der gespeicherten Audiodaten bevorzugt eine Fehlererkennung. Zudem kann eine Fehlerkorrektur durchgeführt werden. Falls die Fehlerkorrektur nicht möglich ist oder deren Kapazitäten erschöpft sind, also eine weitere Korrektur von Fehlern nicht möglich ist, erfolgt bevorzugt eine Fehlerverdeckung ("error concealment") zur Verdeckung von Fehlern, bei der fehlerhafte Daten durch einen Schätzwert ersetzt werden.

Bevorzugt erfolgt die Übermittlung automatisch bei einem Start eines das Kraftfahrzeug-Informations- und Unterhaltungssystem beinhaltenden Kraftfahrzeugs. Dadurch werden in vorteilhafter Weise die gespeicherten Audiodaten für einen Insassen des Kraftfahrzeugs bereitgestellt, ohne dass dieser dazu eine eigenständige Anforderung vornehmen muss. Dazu kann das Kraftfahrzeug-Informations- und Unterhaltungssystem bei dem Start des Kraftfahrzeugs automatisch eine Verbindung zu dem Heimunterhaltungs-System, beispielsweise über eine WLAN-Verbindung, herstellen und abfragen, ob zu übermittelnde Audiodaten vorliegen. Bei einem Vorliegen solcher Audiodaten können diese anschließend automatisch abgerufen werden.

In einer weiteren Ausführungsform des erfindungsgemäßen Verfahrens werden die gespeicherten Audiodaten zunächst von dem Heimunterhaltungs-System auf einen tragbaren Speicherträger und später von dem tragbaren Speicherträger auf das Kraftfahrzeug-Informations- und Unterhaltungssystem übertragen. Bevorzugt werden die gespeicherten Audiodaten unmittelbar nach dem Speichern auf dem zumindest einen Speicherträger von dem Heimunterhaltungs-System auf den tragbaren Speicherträger übertragen.

Das Übertragen von dem Heimunterhaltungs-System auf den tragbaren Speicherträger und/oder das Übertragen von dem tragbaren Speicherträger auf das Kraftfahrzeug-Informations- und Unterhaltungssystem kann dabei zumindest teilweise über eine drahtgebundene Verbindung und/oder über eine Funkverbindung, insbesondere eine Bluetooth-Verbindung, erfolgen.

In einer weiteren Ausführungsform ist die Verarbeitungs- und Speichervorrichtung Bestandteil des Kraftfahrzeug-Informations- und Unterhaltungssystems.

Die empfangenen Audio- und Videodaten können dabei von der Fernseh-Empfangsvorrichtung an das Kraftfahrzeug-Informations- und Unterhaltungssystem übermittelt werden. Die Übermittlung kann zumindest teilweise über eine drahtgebundene Verbindung, insbesondere eine LAN-Verbindung, erfolgen. Zusätzlich oder alternativ kann die Übermittlung zumindest teilweise über eine Funkverbindung, insbesondere eine WLAN-Verbindung, erfolgen. Dadurch lassen sich auch verhältnismäßig große Distanzen zwischen der Fernseh-Empfangsvorrichtung und dem Kraftfahrzeug-Informations- und Unterhaltungssystem in einfacher Weise überbrücken. Bevorzugt werden die empfangenen Audio- und Videodaten dabei verschlüsselt übermittelt oder es erfolgt ein Verbindungsaufbau über einen gesicherten Kanal.

Weiterhin erfolgt im Hinblick auf eine Fehlerausfallsicherheit ("error resilience") bei der Übermittlung der empfangenen Audio- und Videodaten bevorzugt eine Fehlererkennung. Zudem kann eine Fehlerkorrektur durchgeführt werden. Falls die Fehlerkorrektur nicht möglich ist oder deren Kapazitäten erschöpft sind, also eine weitere Korrektur von Fehlern nicht möglich ist, erfolgt bevorzugt eine Fehlerverdeckung ("error concealment") zur Verdeckung von Fehlern, bei der fehlerhafte Daten durch einen Schätzwert ersetzt werden.

In einer weiteren Ausgestaltung des erfindungsgemäßen Verfahrens werden der Zeitpunkt des Beginns des Empfangens der Audio- und Videodaten und der Zeitpunkt des Endes des Empfangens der Audio- und Videodaten vor dem Empfangen der Audio-und Videodaten festgelegt und die empfangenen Audio- und Videodaten vollständig an die Verarbeitungs- und Speichervorrichtung übermittelt. Diese Ausgestaltung des Verfahrens ist besonders geeignet, wenn eine Fernseh-Sendung vollständig durch Anhören der extrahierten Audiodaten bei einer Fahrt mit dem Kraftfahrzeug mitverfolgt werden soll. Insbesondere bei relativen kurzen Fernseh-Beiträgen ist dies vorteilhaft.

In einer alternativen Ausgestaltung des erfindungsgemäßen Verfahrens wird das Übermitteln von zumindest Teilen der empfangenen Audio- und Videodaten mittels eines ersten Betätigens einer Taste während des Empfangens der Audio- und Video-daten gestartet. Zudem kann der Zeitpunkt des Endes des Übermittelns mittels des ersten Betätigens der Taste oder mittels zumindest eines zweiten Betätigens der Taste festgelegt werden. Diese Ausgestaltung des Verfahrens ist besonders vorteilhaft für ein Zu-Ende-Verfolgen einer teilweise betrachteten Fernseh-Sendung.

In einer weiteren alternativen Ausgestaltung des erfindungsgemäßen Verfahrens wird das Empfangen der Audio- und Videodaten mittels eines ersten Betätigens einer Taste gestartet und die empfangenen Audio- und Videodaten werden vollständig an die Verarbeitungs- und Speichervorrichtung übermittelt. Diese Ausgestaltung des Verfahrens ist besonders vorteilhaft für ein Zu-Ende-Verfolgen einer teilweise betrachteten Fernseh-Sendung, falls das Kraftfahrzeug-Informations- und Unterhaltungssystem über eine eigene Fernseh-Empfangsvorrichtung verfügt. In diesem Fall kann das Empfangen der Audio- und Video-daten mittels dieser Fernseh-Empfangsvorrichtung erfolgen und die weiteren Schritte des erfindungsgemäßen Verfahrens ebenfalls mittels des Kraftfahrzeug-Informations- und Unterhaltungssystems durchgeführt werden.

Besonders bevorzugt ist die Taste in den genannten Ausgestaltungen Bestandteil eines Zündschlüssels eines das Kraftfahrzeug-Informations- und Unterhaltungssystem beinhaltenden Kraftfahrzeugs. Dadurch kann das Verfahren in vorteilhafter Weise auf bereits vorhandenen Komponenten eines Kraftfahrzeugs zurückgreifen. Zudem kann durch die Integration der Taste in den Zündschlüssel des Kraftfahrzeugs eine möglichst einfache und sichere Bedienung ermöglicht werden. Dies erhöht den Bedienkomfort.

In einer weiteren Ausführungsform befindet sich das Kraftfahrzeug-Informations- und Unterhaltungssystem vor dem Übermitteln von zumindest Teilen der empfangenen Audio- und Videodaten in einem Energiesparmodus und wird mittels des ersten Betätigens der Taste aktiviert, insbesondere reaktiviert. Diese Ausführungsform besitzt den Vorteil eines möglichst geringen Energieverbrauchs des Kraftfahrzeug-Informations- und Unterhaltungssystems, was insbesondere bei ausgeschaltetem Motor des Kraftfahrzeugs von besonderer Bedeutung ist.

In einer weiteren Ausführungsform des erfindungsgemäßen Verfahrens werden zumindest Teile der empfangenen Audio- und Videodaten von der Fernseh-Empfangsvorrichtung an ein Heimunterhaltungs-System übermittelt und auf einem Speicherträger des Heimunterhaltungs-Systems gespeichert. Die gespeicherten Audio- und Videodaten werden von dem Speicherträger des Heimunterhaltungs-Systems zunächst auf einen tragbaren Speicherträger und später von dem tragbaren Speicherträger auf die Verarbeitungs- und Speichervorrichtung übertragen. Bevorzugt werden die gespeicherten Audio- und Videodaten unmittelbar nach dem Speichern von dem Speicherträger des Heimunterhaltungs-Systems auf den tragbaren Speicherträger übertragen. Das Übertragen von dem Speicherträger des Heimunterhaltungs-Systems auf den tragbaren Speicherträger und/oder das Übertragen von dem tragbaren Speicherträger auf die Verarbeitungs- und Speichervorrichtung kann dabei zumindest teilweise über eine drahtgebundene Verbindung und/oder über eine Funkverbindung, insbesondere über eine Bluetooth-Verbindung, erfolgen.

Der Zeitpunkt des Beginns des Übermittelns und der Zeitpunkt des Endes des Übermittelns von zumindest Teilen der empfangenen Audio- und Videodaten an das Heimunterhaltungs-System werden in einer Ausgestaltung vor dem Empfangen der Audio-und Videodaten festgelegt und die empfangenen Audio- und Videodaten werden vollständig an das Heimunterhaltungs-System übermittelt. Diese Ausgestaltung des Verfahrens ist besonders geeignet, wenn eine Fernseh-Sendung vollständig durch Anhören der extrahierten Audiodaten bei einer Fahrt mit dem Kraftfahrzeug mitverfolgt werden soll. Insbesondere bei relativen kurzen Fernseh-Beiträgen ist dies vorteilhaft.

In einer alternativen Ausgestaltung wird das Übermitteln an das Heimunterhaltungs-System mittels eines ersten Betätigens einer Taste während des Empfangens der Audio- und Videodaten gestartet. Diese Ausgestaltung des Verfahrens ist besonders vorteilhaft für ein Zu-Ende-Verfolgen einer teilweise betrachteten Fernseh-Sendung.

In einer weiteren Ausführungsform des erfindungsgemäßen Verfahrens wechselt die Verarbeitungs- und Speichervorrichtung nach dem Speichern der extrahierten Audiodaten automatisch in einen Energiesparmodus, besonders bevorzugt unmittelbar nach dem Speichern oder unmittelbar nach dem Übertragen der gespeicherten Audiodaten auf den tragbaren Speicherträger. Dadurch wird der Energiebedarf in vorteilhafter Weise reduziert.

Die extrahierten Audiodaten können vor oder während des Speicherns komprimiert werden. Dies führt in vorteilhafter Weise zu einem möglichst geringen Speicherbedarf für das Speichern der extrahierten Audiodaten.

Die Fernseh-Empfangsvorrichtung ist bevorzugt ausgewählt aus der Gruppe, bestehend aus einem UHF/VHF-Tuner, einem DVB-T-Tuner, einem DVB-C-Tuner und einem DVB-S-Tuner.

Die Erfindung wird nun anhand der beigefügten Figuren näher erläutert.
- Figur 1: zeigt ein Flussdiagramm eines Verfahrens zum Speichern und Übermitteln von Audiodaten eines Audiound Videodatenstroms gemäß einer ersten Ausführungsform der Erfindung;
- Figur 2: zeigt ein Flussdiagramm eines Verfahrens zum Speichern und Übermitteln von Audiodaten eines Audiound Videodatenstroms gemäß einer zweiten Ausführungsform der Erfindung;
- Figur 3: zeigt ein Verfahren zum Speichern und Übermitteln von Audiodaten eines Audio- und Videodatenstroms gemäß einer dritten Ausführungsform der Erfindung;
- Figur 4: zeigt ein Verfahren zum Speichern und Übermitteln von Audiodaten eines Audio- und Videodatenstroms gemäß einer vierten Ausführungsform der Erfindung;
- Figur 5: zeigt ein Verfahren zum Speichern und Übermitteln von Audiodaten eines Audio- und Videodatenstroms gemäß einer fünften Ausführungsform der Erfindung;
- Figur 6: zeigt ein Verfahren zum Speichern und Übermitteln von Audiodaten eines Audio- und Videodatenstroms gemäß einer sechsten Ausführungsform der Erfindung;
- Figur 7: zeigt ein Verfahren zum Speichern und Übermitteln von Audiodaten eines Audio- und Videodatenstroms gemäß einer siebten Ausführungsform der Erfindung;
- Figur 8: zeigt ein Verfahren zum Speichern und Übermitteln von Audiodaten eines Audio- und Videodatenstroms gemäß einer achten Ausführungsform der Erfindung.

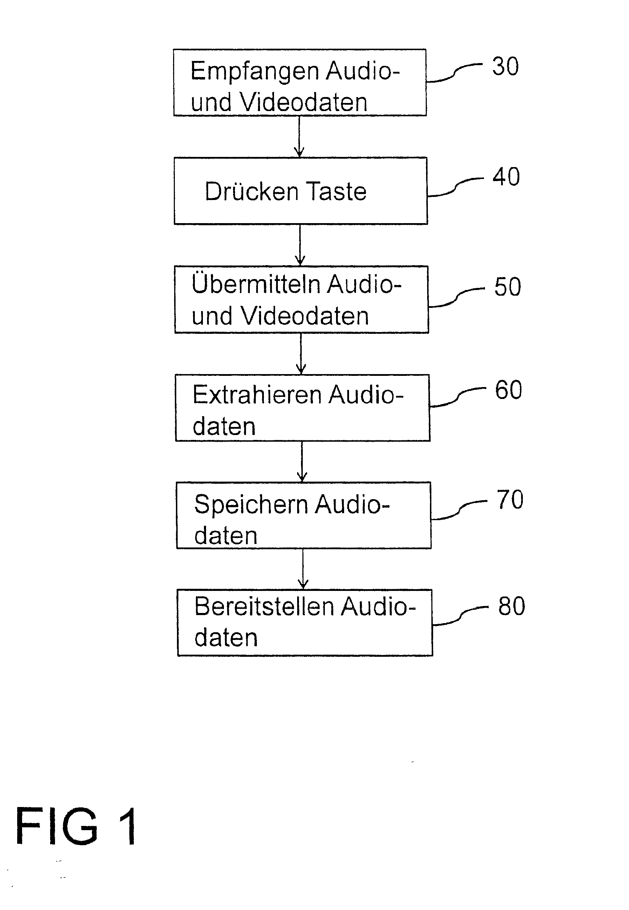

Figur 1 zeigt ein Flussdiagramm eines Verfahrens zum Speichern und Übermitteln von Audiodaten eines Audio- und Videodatenstroms gemäß einer ersten Ausführungsform der Erfindung.

Dazu erfolgt in einem Schritt 30 ein Empfangen von Audio- und Videodaten mittels einer ersten Fernseh-Empfangsvorrichtung in Form eines Fernseh-Tuners bzw. TV-Tuners. Die Fernseh-Empfangsvorrichtung ist dabei einem Fernsehapparat zugeordnet, wodurch ein Fernsehzuschauer einen entsprechenden Fernseh-Beitrag, der die empfangenen Audio- und Videodaten beinhaltet, mittels des Fernsehapparates verfolgen kann. Es kann nun vorkommen, dass der Fernsehzuschauer im Laufe der Sendung müde wird und zu Bett gehen möchte oder beispielsweise durch einen Telefonanruf daran gehindert wird, die Sendung weiter zu verfolgen. Um dem Fernsehzuschauer in diesen Situationen zu ermöglichen, eine angefangene Sendung möglichst zeitnah und komfortabel zu Ende zu verfolgen, drückt dieser in einem Schritt 40 eine Taste, die beispielsweise durch einen Ausdruck wie "Hear you later" oder ein Symbol, das Audiodaten kennzeichnet, beispielsweise ein stilisiertes Ohr, gekennzeichnet ist. Von diesem Zeitpunkt an wird der Ton der restlichen Sendung aufgezeichnet.

Dies erfolgt in der gezeigten Ausführungsform dadurch, dass in einem Schritt 50 die von der ersten Fernseh-Empfangsvorrichtung empfangenen Audio- und Videodaten nach dem Drücken der Taste an eine Verarbeitungs- und Speichervorrichtung übermittelt werden. In einem Schritt 60 werden aus den übermittelten Audio- und Videodaten mittels der Verarbeitungs-und Speichervorrichtung die Audiodaten extrahiert und in einem Schritt 70 die extrahierten Audiodaten auf zumindest einen Speicherträger der Verarbeitungs- und Speichervorrichtung gespeichert.

In einem Schritt 80 erfolgt schließlich ein Bereitstellen der gespeicherten Audiodaten in zumindest einem Kraftfahrzeug-Informations- und Unterhaltungssystem.

Die gespeicherten Audiodaten stehen somit in dem Kraftfahrzeug-Informations- und Unterhaltungssystem, das auch als Kraftfahrzeug-Infotainment und Entertainmentsystem bezeichnet wird, zur Verfügung, und der Zuschauer kann die Sendung zeitnah und komfortabel im eigenen Kraftfahrzeug zu Ende verfolgen, beispielsweise auf dem Weg zur Arbeit am nächsten Morgen.

In der gezeigten Ausführungsform werden somit die während des Empfangs am empfangenden Gerät, d. h. an der Fernseh-Empfangsvorrichtung, vorhandenen Informationen in Form eines Audio- und Videodatenstroms in einen Datenstrom eines anderen Formats, welches weniger speicherintensiv als das Original-Datenformat ist, gewandelt und dieser Datenstrom auf einem anderen als dem ursprünglich empfangenden Gerät zur Verfügung gestellt, ohne dazu auf externe Quellen angewiesen zu sein. Dadurch entfällt insbesondere ein Suchen und Herunterladen von Audio-Podcasts aus dem Internet, welche von einigen Fernsehsendern für ausgewählte Sendungen zur Verfügung gestellt werden.

Weiterhin ist die gezeigte Ausführungsform besonders komfortabel, da lediglich ein Drücken der Taste erforderlich ist. Zudem besitzt die gezeigte Ausführungsform einen geringen Speicherplatzbedarf, da keine umfangreichen Video-Daten gespeichert werden, die in dem Kraftfahrzeug, insbesondere durch den Fahrer des Kraftfahrzeugs, nicht genutzt werden können bzw. dürfen.

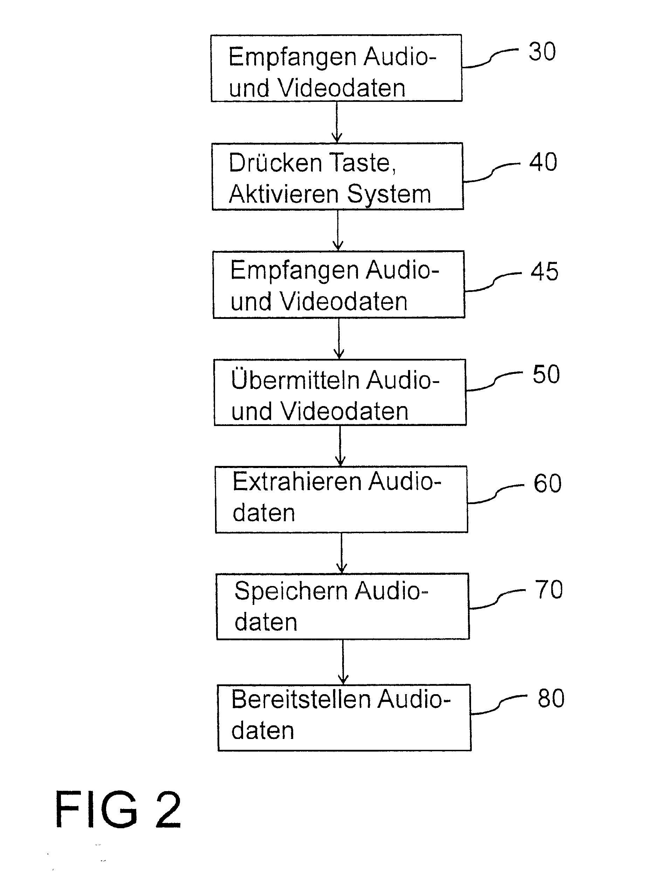

Figur 2 zeigt ein Flussdiagramm eines Verfahrens zum Speichern und Übermitteln von Audiodaten eines Audio- und Videodatenstroms gemäß einer zweiten Ausführungsform der Erfindung. Komponenten mit den gleichen Funktionen wie in Figur 1 werden mit den gleichen Bezugszeichen gekennzeichnet und im Folgenden nicht näher erörtert.

In der zweiten Ausführungsform des erfindungsgemäßen Verfahrens erfolgt in einem Schritt 30 ein Empfangen von Audio- und Videodaten mittels einer zweiten Fernseh-Empfangsvorrichtung in Form eines Fernseh-Tuners bzw. TV-Tuners. Die zweite Fernseh-Empfangsvorrichtung ist dabei einem Fernsehapparat zugeordnet, wodurch ein Fernsehzuschauer einen Fernseh-Beitrag, der die empfangenen Audio- und Videodaten beinhaltet, mittels des Fernsehapparats verfolgen kann.

In einem Schritt 40 erfolgt ein Drücken einer Taste, wodurch der Ton der restlichen Sendung aufgezeichnet wird.

Dies erfolgt in der gezeigten Ausführungsform dadurch, dass durch das Drücken der Taste ein Kraftfahrzeug-Informations-und Unterhaltungssystem, das sich zuvor in einem Energiesparmodus befunden hat, aktiviert wird und entweder mittels einer direkten Verbindung zu der zweiten Fernseh-Empfangsvorrichtung oder mittels einer Verbindung zu einem Heimunterhaltungs-System, das mit der zweiten Fernseh-Empfangsvorrichtung verbunden ist, abfragt, welcher Kanal an der zweiten Fernseh-Empfangsvorrichtung momentan eingestellt ist. Anschließend erfolgt in einem Schritt 45 ein Empfangen von Audio- und Videodaten mittels einer ersten Fernseh-Empfangsvorrichtung, wobei diese dem Kraftfahrzeug-Informations- und Unterhaltungssystems zugeordnet ist und wobei an der ersten Fernseh-Empfangsvorrichtung der gleiche Kanal eingestellt ist, der auch an der zweiten Fernseh-Empfangsvorrichtung gewählt ist.

In einem Schritt 50 erfolgt ein Übermitteln der von der ersten Fernseh-Empfangsvorrichtung empfangenen Audio- und Video-daten an eine Verarbeitungs- und Speichervorrichtung, die in der gezeigten Ausführungsform ebenfalls Bestandteil des Kraftfahrzeug-Informations- und Unterhaltungssystems ist.

In einem Schritt 60 erfolgt ein Extrahieren der Audiodaten aus den übermittelten Audio- und Videodaten mittels der Verarbeitungs- und Speichervorrichtung und in einem Schritt 70 ein Speichern der extrahierten Audiodaten auf zumindest einem Speicherträger der Verarbeitungs- und Speichervorrichtung.

Schließlich erfolgt in einem Schritt 80 ein Bereitstellen der gespeicherten Audiodaten in dem Kraftfahrzeug-Informations-und Unterhaltungssystem.

Diese Ausführungsform der Verfahrens ist besonders vorteilhaft für ein Zu-Ende-Verfolgen einer teilweise betrachteten Fernseh-Sendung, falls das Kraftfahrzeug-Informations- und Unterhaltungssystem über eine eigene Fernseh-Empfangsvorrichtung verfügt, da das Empfangen der Audio- und Videodaten mittels dieser Fernseh-Empfangsvorrichtung erfolgen kann.

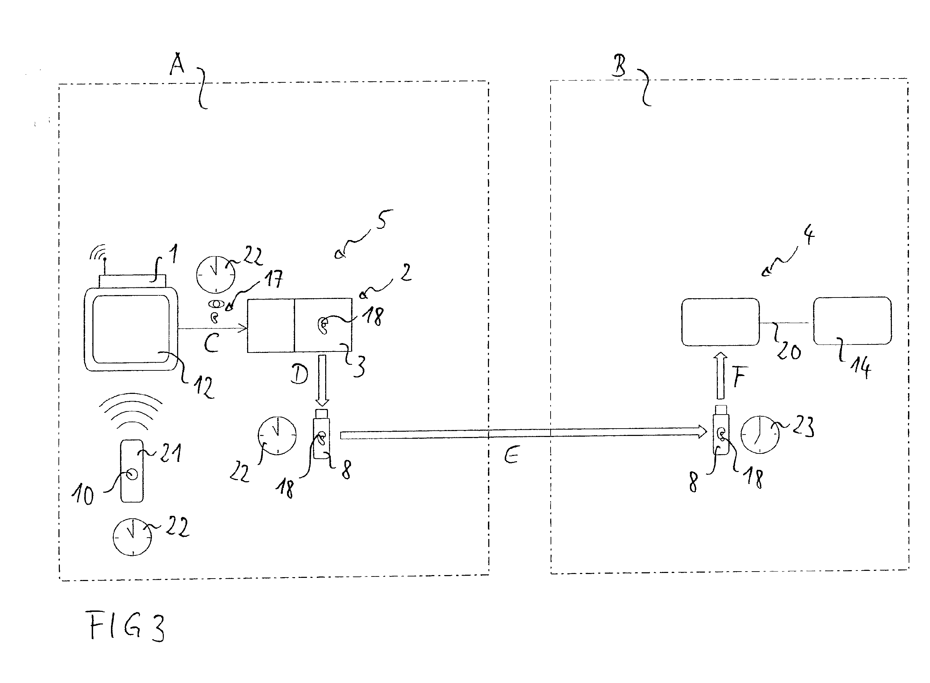

Figur 3 zeigt ein Verfahren zum Speichern und Übermitteln von Audiodaten eines Audio- und Videodatenstroms gemäß einer dritten Ausführungsform der Erfindung.

Dabei erfolgt ein Empfangen von Audio- und Videodaten mittels einer Fernseh-Empfangsvorrichtung 1. Die Fernseh-Empfangsvorrichtung 1 ist dabei beispielsweise ausgewählt aus der Gruppe, bestehend aus einem UHF/VHF-Tuner, einem DVB-T-Tuner, einem DVB-C-Tuner und einem DVB-S-Tuner.

Die Fernseh-Empfangsvorrichtung 1 ist einem Fernsehapparat 12 zugeordnet, wodurch ein in Figur 3 nicht dargestellter Fernsehzuschauer die empfangenen Audio- und Videodaten an dem Fernsehapparat 12 verfolgen kann.

Wird nun der Fernsehzuschauer im Laufe der Sendung müde und möchte ins Bett gehen, jedoch trotzdem die unterbrochene Sendung möglichst zeitnah und komfortabel zu Ende verfolgen, betätigt er eine Taste 10 einer Fernbedienung 21, wodurch die schematisch dargestellten Audio- und Videodaten 17 ab diesem Zeitpunkt an eine Verarbeitungs- und Speichervorrichtung 2 übermittelt werden. Dies ist schematisch durch einen Pfeil C dargestellt. In der Verarbeitungs- und Speichervorrichtung 2 werden aus den übermittelten Audio- und Videodaten 17 die schematisch dargestellten Audiodaten 18 extrahiert und auf einem Speicherträger 3 der Verarbeitungs- und Speichervorrichtung 2 gespeichert. Dies kann beispielsweise durch Wandeln der Tonspur in einen gegebenenfalls komprimierten Audio-Datenstrom und Abspeichern des Audio-Datenstroms erfolgen.

Der Zeitpunkt des Endes des Übermittelns der empfangenen Audio- und Videodaten an die Verarbeitungs- und Speichervorrichtung 2 kann dabei mittels des ersten Betätigens oder mittels zumindest eines zweiten Betätigens der Taste 10 festgelegt werden. Durch das erste Betätigen der Taste 10 erfolgt das Übermitteln der empfangenen Audio- und Videodaten an die Verarbeitungs- und Speichervorrichtung 2 und damit die Aufzeichnung bzw. Speicherung der Audiodaten 18 für beispielsweise 30 Minuten. Sollte diese Zeit nicht ausreichen, um den Rest der Sendung in Form der Audiodaten 18 aufzuzeichnen, so kann durch weitere Betätigungen der Taste 10 die Übermittlungsdauer und damit die Aufnahme- bzw. Speicherungsdauer schrittweise erhöht werden. Beispielsweise kann jede weitere Betätigung nach der ersten eine Erhöhung um 30 Minuten bedeuten. Alternativ ist es möglich, dass neben den Audio- und Videodaten weitere Daten empfangen werden, die insbesondere den Zeitpunkt des Endes der Fernsehsendung enthalten, und diese Daten ebenfalls an die Verarbeitungs- und Speichervorrichtung 2 übermittelt werden, welche daraus den Zeitpunkt des Endes der Fernsehsendung und damit den Zeitpunkt des Endes des Übermittelns bestimmt.

In der gezeigten Ausführungsform ist die Verarbeitungs- und Speichervorrichtung 2 Bestandteil eines Heimunterhaltungs-Systems 5, das auch als Home-Entertainment-System bezeichnet wird. Die Fernseh-Empfangsvorrichtung 1, der Fernsehapparat 12 und das Heimunterhaltungs-Systems 5 sind in einem Bereich A angeordnet, welcher schematisch eine Wohnung oder ein Haus darstellt.

Das Extrahieren der Audiodaten 18 aus den übermittelten Audio- und Videodaten 17 und das Speichern der extrahierten Audiodaten 18 auf dem Speicherträger 3 erfolgen dabei noch am gleichen Abend, an dem auch das Empfangen der Audio- und Videodaten mittels der Fernseh-Empfangsvorrichtung 1 sowie das nahezu zeitgleiche Übermitteln der empfangenen Audio- und Videodaten an die Verarbeitungs- und Speichervorrichtung 2 nach dem ersten Betätigen der Taste 10 erfolgen, was schematisch durch eine Uhr 22 dargestellt ist. Zudem werden die gespeicherten Audiodaten 18 noch am gleichen Abend unmittelbar nach Beendigung des Speicherns der extrahierten Audiodaten 18 auf dem Speicherträger 3 von dem Speicherträger 3 der Verarbeitungs- und Speichervorrichtung 2 auf einen tragbaren Speicherträger 8 übertragen. Dies ist schematisch durch einen Pfeil D dargestellt. Der tragbare Speicherträger 8 ist beispielsweise ein USB-Stick. Die gespeicherten Audiodaten 18 können dabei drahtgebunden oder drahtlos, insbesondere über eine Bluetooth-Verbindung, auf den tragbaren Speicherträger 8 übertragen werden. Bevorzugt wechselt die Verarbeitungs- und Speichervorrichtung 2 unmittelbar nach dem Übertragen der gespeicherten Audiodaten 18 auf den tragbaren Speicherträger 8 automatisch in einen Energiesparmodus. Insbesondere kann sie sich vollständig abschalten.

Der tragbare Speicherträger 8 wird am nächsten Morgen, der schematisch durch eine Uhr 23 dargestellt ist, in einen Bereich B, der schematisch ein Kraftfahrzeug darstellt, verbracht, was durch einen Pfeil E dargestellt ist. Anschließend werden die gespeicherten Audiodaten 18 von dem tragbaren Speicherträger 8 auf ein Kraftfahrzeug-Informations- und Unterhaltungssystem 4 des Kraftfahrzeugs übertragen. Dies ist schematisch durch einen Pfeil F dargestellt. Die gespeicherten Audiodaten 18 werden dadurch dem Kraftfahrzeug-Informations- und Unterhaltungssystem 4 bereitgestellt. Somit kann die unterbrochene Sendung während einer Fahrt mit dem Kraftfahrzeug zu Ende verfolgt werden, indem die gespeicherten Audiodaten 18 über ein Lautsprechersystem 14, das mit dem Kraftfahrzeug-Informations- und Unterhaltungssystem 4 über eine Verbindungsleitung 20 verbunden ist, abgespielt werden.

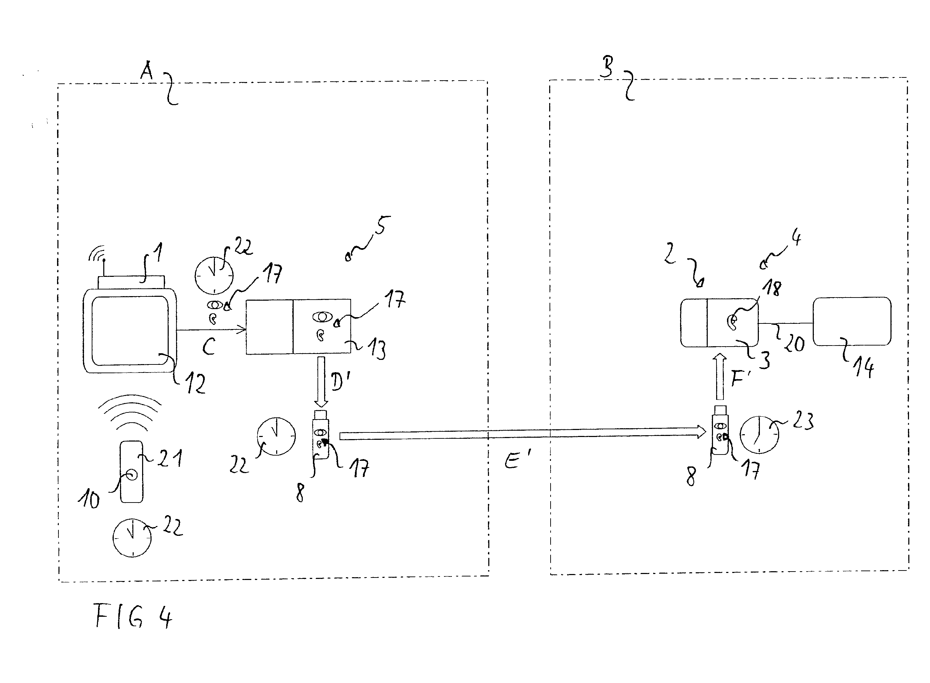

Figur 4 zeigt ein Verfahren zum Speichern und Übermitteln von Audiodaten eines Audio- und Videodatenstroms gemäß einer vierten Ausführungsform der Erfindung. Komponenten mit den gleichen Funktionen wie in Figur 3 werden mit den gleichen Bezugszeichen gekennzeichnet und im Folgenden nicht näher erörtert.

Die vierte Ausführungsform unterscheidet sich dabei von der dritten Ausführungsform dadurch, dass die Verarbeitungs- und Speichervorrichtung 2 Bestandteil des Kraftfahrzeug-Informations- und Unterhaltungssystems 4 ist. Nach Betätigen der Taste 10 werden die empfangenen Audio- und Videodaten von der Fernseh-Empfangsvorrichtung 1 an das Heimunterhaltungs-System 5 übermittelt und auf einem Speicherträger 13 des Heimunterhaltungs-Systems 5 gespeichert. Die gespeicherten Audio-und Videodaten 17 werden noch am gleichen Abend unmittelbar nach Beendigung des Speicherns von dem Speicherträger 13 des Heimunterhaltungs-Systems 5 auf den tragbaren Speicherträger 8 übertragen. Dies ist schematisch durch ein Pfeil D' dargestellt. Bevorzugt wechselt das Heimunterhaltungs-System 5 unmittelbar nach dem Übertragen der gespeicherten Audio- und Videodaten 17 auf den tragbaren Speicherträger 8 automatisch in einen Energiesparmodus. Insbesondere kann es sich vollständig abschalten.

Der tragbare Speicherträger 8 wird am nächsten Morgen in das Kraftfahrzeug verbracht, wie dies schematisch durch einen Pfeil E' dargestellt ist. Daraufhin werden die gespeicherten Audio- und Videodaten 17 von dem tragbaren Speicherträger 8 auf die Verarbeitungs- und Speichervorrichtung 2 übertragen. Dies ist schematisch durch einen Pfeil F' dargestellt. Anschließend werden aus den übertragenen Audio- und Videodaten 17 die Audiodaten 18 mittels der Verarbeitungs- und Speichervorrichtung 2 extrahiert und auf einen Speicherträger 3 der Verarbeitungs- und Speichervorrichtung 2 gespeichert.

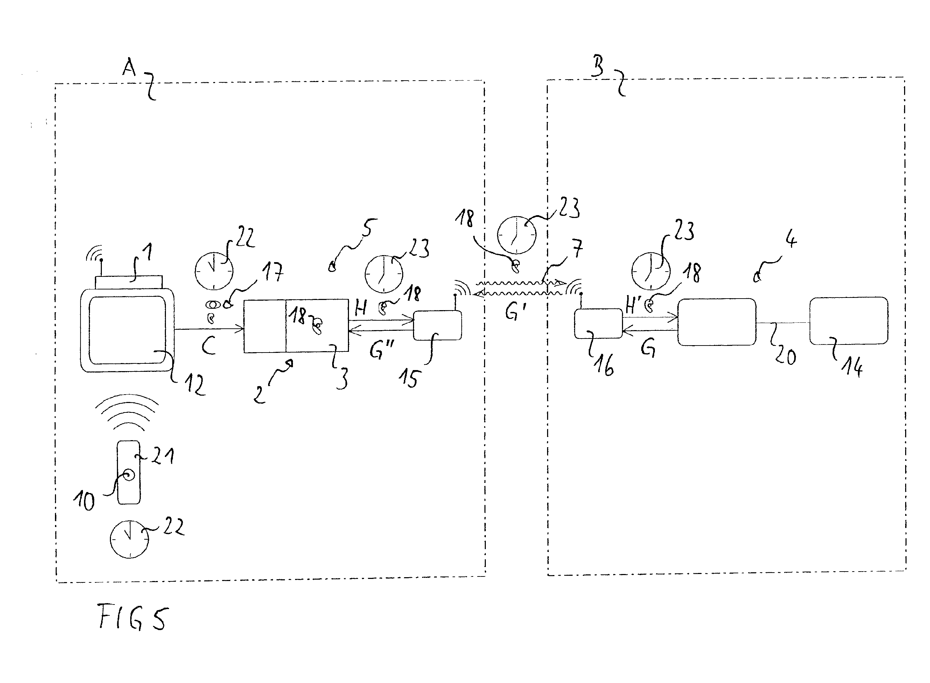

Figur 5 zeigt ein Verfahren zum Speichern und Übermitteln von Audiodaten eines Audio- und Videodatenstroms gemäß einer fünften Ausführungsform der Erfindung. Komponenten mit den gleichen Funktionen wie in den vorhergehenden Figuren werden mit den gleichen Bezugszeichen gekennzeichnet und im Folgenden nicht näher erörtert.

In der gezeigten Ausführungsform ist die Verarbeitungs- und Speichervorrichtung 2 Bestandteil eines Heimunterhaltungs-Systems 5. Die gezeigte Ausführungsform unterscheidet sich dabei von der in Figur 3 gezeigten Ausführungsform dadurch, dass die gespeicherten Audiodaten 18 automatisch bei einem Start des Kraftfahrzeugs von dem Heimunterhaltungs-System 5 an das Kraftfahrzeug-Informations- und Unterhaltungssystem 4 übermittelt werden.

Dazu fragt das Kraftfahrzeug-Informations- und Unterhaltungssystem 4 beim Start des Kraftfahrzeugs selbständig ab, ob zu übertragende Daten auf dem Speicherträger 3 der Verarbeitungs- und Speichervorrichtung 2 vorliegen. In der gezeigten Ausführungsform wird dabei die Abfrage von dem Kraftfahrzeug-Informations- und Unterhaltungssystem 4 an eine dem Kraftfahrzeug zugeordnete Sende- und Empfangsvorrichtung 16 übermittelt. Dies ist schematisch durch einen Pfeil G dargestellt. Von der Sende- und Empfangsvorrichtung 16 wird die Abfrage an eine in dem Bereich A angeordnete Sende- und Empfangsvorrichtung 15 weitergeleitet. Dies ist schematisch durch einen Pfeil G' dargestellt. Von dieser wird die Abfrage schließlich an die Verarbeitungs- und Speichervorrichtung 2 weitergeleitet. Dies ist schematisch durch einen Pfeil G" dargestellt.

Enthält der Speicherträger 3 gespeicherte Audiodaten 18, werden diese an die Sende- und Empfangsvorrichtung 15 übertragen. Dies ist schematisch durch einen Pfeil H dargestellt. Von der Sende- und Empfangsvorrichtung 15 werden die Audiodaten 18 über eine Funkverbindung 7, beispielsweise eine WLAN-Verbindung, an die dem Kraftfahrzeug zugeordnete Sende- und Empfangsvorrichtung 16 übermittelt. Von der Sende- und Empfangsvorrichtung 16 werden die Audiodaten 18 an das Kraftfahrzeug-Informations- und Unterhaltungssystem 4 übermittelt, wie dies schematisch durch einen Pfeil H' dargestellt ist.

Dadurch können die gespeicherten Audiodaten 18 in einer besonders komfortablen Weise in dem Kraftfahrzeug-Informations-und Unterhaltungssystem 4 bereitgestellt werden, ohne dass dazu ein tragbarer Speicherträger erforderlich ist. Zudem wird das Kraftfahrzeug-Informations- und Unterhaltungssystem 4 erst beim Start des Kraftfahrzeugs aktiviert, wodurch das Kraftfahrzeug-Informations- und Unterhaltungssystem 4 keinen Ruhemodus und damit auch kein Reaktivieren während des Ruhemodus benötigt, um die gespeicherten Audiodaten 18 in dem Kraftfahrzeug-Informations- und Unterhaltungssystem 4 bereitzustellen.

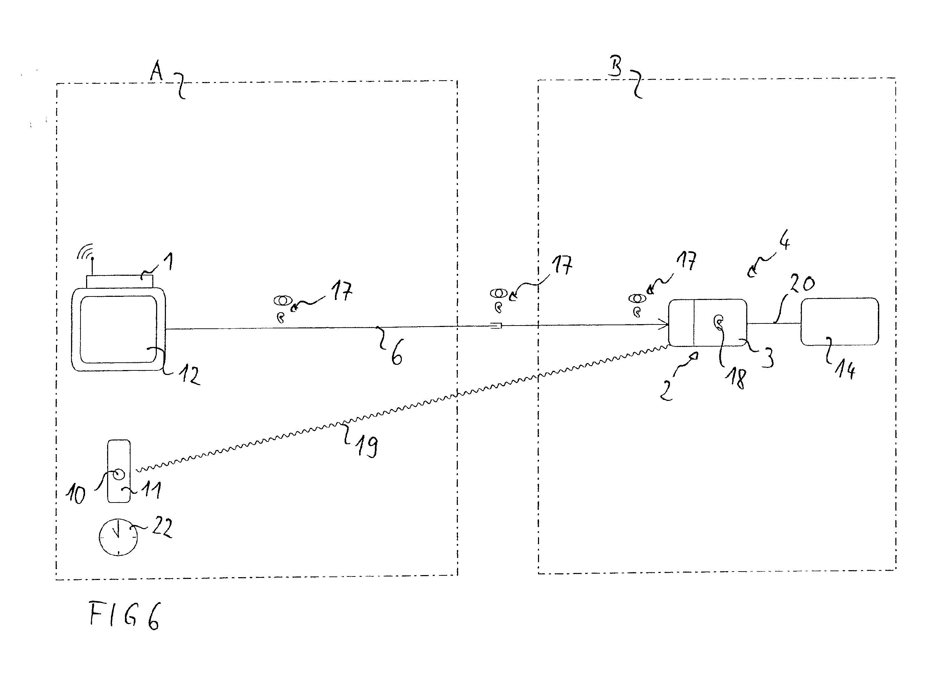

Figur 6 zeigt ein Verfahren zum Speichern und Übermitteln von Audiodaten eines Audio- und Videodatenstroms gemäß einer sechsten Ausführungsform der Erfindung. Komponenten mit den gleichen Funktionen wie in den vorhergehenden Figuren werden mit den gleichen Bezugszeichen gekennzeichnet und im Folgenden nicht näher erörtert.

In der gezeigten Ausführungsform ist die die Verarbeitungs-und Speichervorrichtung 2 Bestandteil des Kraftfahrzeug-Informations- und Unterhaltungssystems 4. Diese Ausführungsform unterscheidet sich von der in Figur 4 gezeigten Ausführungsform dadurch, dass die Audio- und Videodaten bereits am gleichen Abend, an dem die Fernsehsendung empfangen wird, an die Verarbeitungs- und Speichervorrichtung 2 übermittelt werden. Dazu erfolgt mittels eines ersten Betätigens der Taste 10 neben dem Starten der Übermittelung der empfangenen Audio- und Videodaten eine Aktivierung des Kraftfahrzeug-Informations-und Unterhaltungssystems 4, das sich vor dem Übermitteln der empfangenen Audio- und Videodaten in einem Energiesparmodus bzw. Ruhemodus befunden hat. Es erfolgt somit ein "Aufwecken" des Kraftfahrzeug-Informations- und Unterhaltungssystems 4 mittels des ersten Betätigens der Taste 10.

In der gezeigten Ausführungsform ist die Taste 10 dabei Bestandteil eines Zündschlüssels 11 des Kraftfahrzeugs, der über eine Funkverbindung 19 mit dem Kraftfahrzeug-Informations- und Unterhaltungssystems 4 in Wirkverbindung steht. Dadurch kann das Verfahren in vorteilhafter Weise auf bereits vorhandenen Komponenten des Kraftfahrzeugs zurückgreifen, die entsprechend modifiziert werden. Zudem kann durch die Integration der Taste 10 in den Zündschlüssel 11 des Kraftfahrzeugs eine möglichst einfache und sichere Bedienung ermöglicht werden.

Die Audio- und Videodaten 17 werden in der gezeigten Ausführungsform über eine drahtgebundene Verbindung 6 von der Fernseh-Empfangsvorrichtung 1 an das Kraftfahrzeug-Informations-und Unterhaltungssystem 4 übermittelt. In der Verarbeitungs-und Speichervorrichtung 2 werden aus den übermittelten Audio-und Videodaten 17 anschließend die Audiodaten 18 extrahiert und auf einem Speicherträger 3 der Verarbeitungs- und Speichervorrichtung 2 gespeichert.

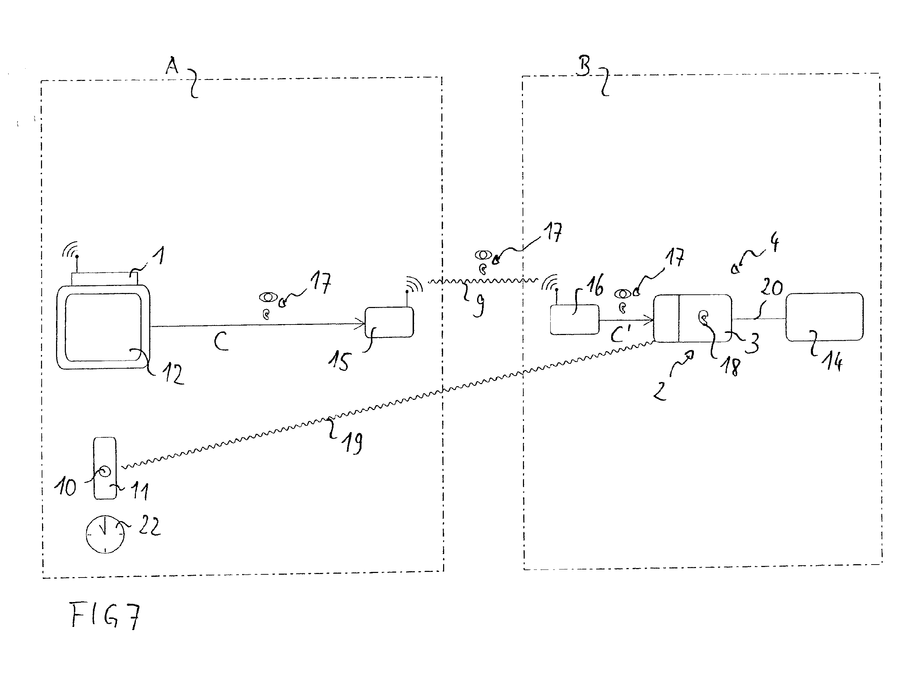

Figur 7 zeigt ein Verfahren zum Speichern und Übermitteln von Audiodaten eines Audio- und Videodatenstroms gemäß einer siebten Ausführungsform der Erfindung. Komponenten mit den gleichen Funktionen wie in den vorhergehenden Figuren werden mit den gleichen Bezugszeichen gekennzeichnet und im Folgenden nicht näher erörtert.

Diese Ausführungsform unterscheidet sich von der in Figur 6 gezeigten Ausführungsform dadurch, dass die empfangenen Audio- und Videodaten 17 von der Fernseh-Empfangsvorrichtung 1 zumindest teilweise über eine Funkverbindung 9 an das Kraftfahrzeug-Informations- und Unterhaltungssystem 4 übermittelt werden. Dazu werden die empfangenen Audio- und Videodaten 17 an eine in dem Bereich A angeordnete Sende- und Empfangsvorrichtung 15 übermittelt, wie dies schematisch durch einen Pfeil C dargestellt ist. Von der Sende- und Empfangsvorrichtung 15 werden die Audio- und Videodaten 17 über die Funkverbindung 9 an eine dem Kraftfahrzeug zugeordnete Sende- und Empfangsvorrichtung 16 übermittelt. Anschließend werden die Audio- und Videodaten 17 von der Sende- und Empfangsvorrichtung 16 an die Verarbeitungs- und Speichervorrichtung 2 übermittelt, wie dies schematisch durch einen Pfeil C' dargestellt ist.

Aus den übermittelten Audio- und Videodaten 17 werden mittels der Verarbeitung- und Speichervorrichtung 2 die Audiodaten 18 extrahiert und auf einem Speicherträger 3 der Verarbeitungs-und Speichervorrichtung 2 gespeichert.

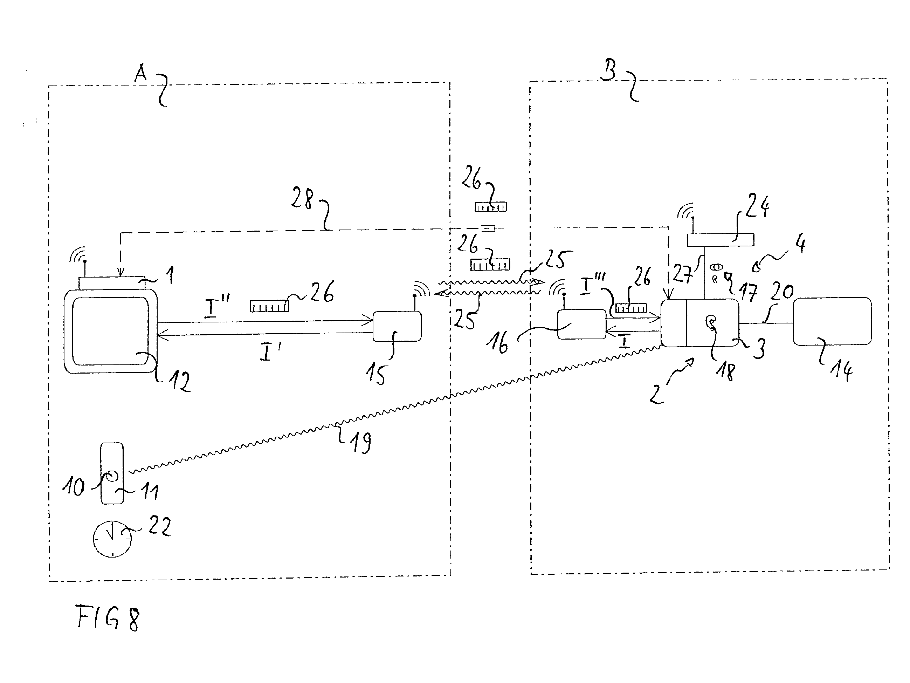

Figur 8 zeigt ein Verfahren zum Speichern und Übermitteln von Audiodaten eines Audio- und Videodatenstroms gemäß einer achten Ausführungsform der Erfindung. Komponenten mit den gleichen Funktionen wie in den vorhergehenden Figuren werden mit den gleichen Bezugszeichen gekennzeichnet und im Folgenden nicht näher erörtert.

Diese Ausführungsform unterscheidet sich von den in den Figuren 3 bis 7 gezeigten Ausführungsformen dadurch, dass das Kraftfahrzeug eine Fernseh-Empfangsvorrichtung 24 beinhaltet, die in der gezeigten Ausführungsform über eine Verbindungsleitung 27 mit dem Kraftfahrzeug-Informations- und Unterhaltungssystem 4 verbunden ist oder in das Kraftfahrzeug-Informations- und Unterhaltungssystem 4 integriert sein kann, wobei dann die Verbindungsleitung 27 innerhalb des Kraftfahrzeug-Informations- und Unterhaltungssystems 4 verläuft. Die Fernseh-Empfangsvorrichtung 24 ist dabei beispielsweise ausgewählt aus der Gruppe, bestehend aus einem UHF/VHF-Tuner, einem DVB-T-Tuner und einem DVB-S-Tuner.

Wie in den vorherigen Ausführungsformen erfolgt auch in der in Figur 8 gezeigten Ausführungsform ein Empfangen von nicht näher dargestellten Audio- und Videodaten mittels der dem Fernsehapparat 12 zugeordneten Fernseh-Empfangsvorrichtung 1, wodurch ein in Figur 8 nicht dargestellter Fernsehzuschauer die empfangenen Audio- und Videodaten an dem Fernsehapparat 12 verfolgen kann.

Wird nun der Fernsehzuschauer im Laufe der Sendung müde und möchte ins Bett gehen, jedoch trotzdem die unterbrochene Sendung möglichst zeitnah und komfortabel zu Ende verfolgen, betätigt er die Taste 10 des Zündschlüssels 11, der über eine Funkverbindung 19 mit dem Kraftfahrzeug-Informations- und Unterhaltungssystems 4 in Wirkverbindung steht, wodurch eine Aktivierung des Kraftfahrzeug-Informations- und Unterhaltungssystems 4, das sich zuvor in einem Energiesparmodus bzw. Ruhemodus befunden hat, erfolgt.

Anschließend fragt das Kraftfahrzeug-Informations- und Unterhaltungssystem 4 selbständig ab, welcher Kanal an der Fernseh-Empfangsvorrichtung 1 momentan eingestellt ist. In der gezeigten Ausführungsform wird dabei die Abfrage von dem Kraftfahrzeug-Informations- und Unterhaltungssystem 4 an eine dem Kraftfahrzeug zugeordnete Sende- und Empfangsvorrichtung 16 übermittelt. Dies ist schematisch durch einen Pfeil I dargestellt. Von der Sende- und Empfangsvorrichtung 16 wird die Abfrage über eine Funkverbindung 25 an eine in dem Bereich A angeordnete Sende- und Empfangsvorrichtung 15 weitergeleitet. Von dieser wird die Abfrage schließlich an die Fernseh-Empfangsvorrichtung 1 weitergeleitet. Dies ist schematisch durch einen Pfeil I' dargestellt. Schematisch dargestellte Informationsdaten 26 darüber, welcher Kanal an der Fernseh-Empfangsvorrichtung 1 momentan eingestellt ist, werden anschließend von der Fernseh-Empfangsvorrichtung 1 an die Sende- und Empfangsvorrichtung 15 geleitet. Dies ist schematisch durch einen Pfeil I" dargestellt. Von der Sende- und Empfangsvorrichtung 15 werden die Informationsdaten 26 über die Funkverbindung 25 an die Sende- und Empfangsvorrichtung 16 weitergeleitet. Von dieser werden die Informationsdaten 26 an das Kraftfahrzeug-Informations- und Unterhaltungssystem 4 weitergeleitet. Dies ist schematisch durch einen Pfeil I''' dargestellt. Das Kraftfahrzeug-Informations- und Unterhaltungssystem 4 stellt anschließend die Fernseh-Empfangsvorrichtung 24 auf den gleichen Kanal ein, der auch auf der Fernseh-Empfangsvorrichtung 1 gewählt ist.

Über die Verbindungsleitung 27 werden im Anschluss daran die schematisch dargestellten Audio- und Videodaten 17 an die Verarbeitungs- und Speichervorrichtung 2, die Bestandteil des Kraftfahrzeug-Informations- und Unterhaltungssystems 4 ist, übermittelt. In der Verarbeitungs- und Speichervorrichtung 2 werden aus den übermittelten Audio- und Videodaten 17 die schematisch dargestellten Audiodaten 18 extrahiert und auf einem Speicherträger 3 der Verarbeitungs- und Speichervorrichtung 2 gespeichert.

Die Abfrage und die Informationsdaten 26 stellen eine verhältnismäßig geringe Datenmenge dar. Somit benötigt dieser Kommunikationskanal nur eine sehr geringe Bandbreite bzw. einen geringen Durchsatz. Daher kann gegebenenfalls auf eine WLAN-Verbindung verzichtet und ein alternatives drahtloses Verfahren mit geringerer Bandbreite eingesetzt werden, welches einen geringeren Energiebedarf besitzt, beispielsweise ZigBee.

Alternativ zu der dargestellten Abfrage und Übermittlung der Informationsdaten 26 zumindest teilweise über die Funkverbindung 25 kann die Abfrage und Übermittlung der Informationsdaten 26 über eine gestrichelt dargestellte drahtgebundene Verbindung 28 erfolgen.

## Patentansprüche

1. Verfahren zum Speichern und Übermitteln von Audiodaten eines Audio- und Videodatenstroms, wobei das Verfahren folgende Schritte aufweist:
- Empfangen von Audio- und Videodaten mittels einer Fernseh-Empfangsvorrichtung (1),
- Übermitteln von zumindest Teilen der empfangenen Audio- und Videodaten an eine Verarbeitungs- und Speichervorrichtung (2),
- Extrahieren der Audiodaten (18) aus den übermittelten Audio- und Videodaten (17) mittels der Verarbeitungs-und Speichervorrichtung (2),
- Speichern der extrahierten Audiodaten (18) auf zumindest einem Speicherträger (3) der Verarbeitungs- und Speichervorrichtung (2),
- Bereitstellen der gespeicherten Audiodaten (18) in zumindest einem Kraftfahrzeug-Informations- und Unterhaltungssystem (4).

2. Verfahren nach Anspruch 1, wobei die Verarbeitungs- und Speichervorrichtung (2) Bestandteil eines Heimunterhaltungs-Systems (5) ist.

3. Verfahren nach Anspruch 2, wobei die gespeicherten Audiodaten von dem Heimunterhaltungs-System (5) an das Kraftfahrzeug-Informations- und Unterhaltungssystem (4) übermittelt werden.

4. Verfahren nach Anspruch 3, wobei die Übermittlung automatisch bei einem Start eines das Kraftfahrzeug-Informations- und Unterhaltungssystem (4) beinhaltenden Kraftfahrzeugs erfolgt.

5. Verfahren nach Anspruch 2, wobei die gespeicherten Audiodaten (18) von dem Heimunterhaltungs-System (5) zunächst auf einen tragbaren Speicherträger (8) übertragen werden und später von dem tragbaren Speicherträger (8) auf das Kraftfahrzeug-Informations- und Unterhaltungssystem (4) übertragen werden.

6. Verfahren nach Anspruch 1, wobei die Verarbeitungs- und Speichervorrichtung (2) Bestandteil des Kraftfahrzeug-Informations- und Unterhaltungssystems (4) ist.

7. Verfahren nach Anspruch 6, wobei die empfangenen Audio-und Videodaten von der Fernseh-Empfangsvorrichtung (1) an das Kraftfahrzeug-Informations- und Unterhaltungssystem (4) übermittelt werden.

8. Verfahren nach einem der vorhergehenden Ansprüche, wobei der Zeitpunkt des Beginns des Empfangens der Audio- und Videodaten und der Zeitpunkt des Endes des Empfangens der Audio- und Videodaten vor dem Empfangen der Audio-und Videodaten festgelegt werden und wobei die empfangenen Audio- und Videodaten vollständig an die Verarbeitungs- und Speichervorrichtung (2) übermittelt werden.

9. Verfahren nach einem der Ansprüche 1 bis 7, wobei das Übermitteln von zumindest Teilen der empfangenen Audio-und Videodaten mittels eines ersten Betätigens einer Taste (10) während des Empfangens der Audio- und Video-daten gestartet wird.

10. Verfahren nach Anspruch 9, wobei der Zeitpunkt des Endes des Übermittelns mittels des ersten Betätigens der Taste (10) oder mittels zumindest eines zweiten Betätigens der Taste (10) festgelegt wird.

11. Verfahren nach einem der Ansprüche 1 bis 7, wobei das Empfangen der Audio- und Videodaten mittels eines ersten Betätigens einer Taste (10) gestartet wird und wobei die empfangenen Audio- und Videodaten vollständig an die Verarbeitungs- und Speichervorrichtung (2) übermittelt werden.

12. Verfahren nach einem der Ansprüche 9 bis 11, wobei die Taste (10) Bestandteil eines Zündschlüssels (11) eines das Kraftfahrzeug-Informations- und Unterhaltungssystem (4) beinhaltenden Kraftfahrzeugs ist.

13. Verfahren nach einem der Ansprüche 9 bis 12, wobei sich das Kraftfahrzeug-Informations- und Unterhaltungssystem (4) vor dem Übermitteln von zumindest Teilen der empfangenen Audio- und Videodaten in einem Energiesparmodus befindet und mittels des ersten Betätigens der Taste (10) aktiviert wird.

14. Verfahren nach Anspruch 6, wobei zumindest Teile der empfangenen Audio- und Videodaten von der Fernseh-Empfangsvorrichtung (1) an ein Heimunterhaltungs-System (5) übermittelt werden und auf einem Speicherträger (13) des Heimunterhaltungs-Systems (5) gespeichert werden und wobei die gespeicherten Audio- und Videodaten von dem Speicherträger (13) des Heimunterhaltungs-Systems (5) zunächst auf einen tragbaren Speicherträger (8) übertragen werden und später von dem tragbaren Speicherträger (8) auf die Verarbeitungs- und Speichervorrichtung (2) übertragen werden.

15. Verfahren nach einem der vorhergehenden Ansprüche, wobei die Fernseh-Empfangsvorrichtung (1) ausgewählt ist aus der Gruppe, bestehend aus einem UHF/VHF-Tuner, einem DVB-T-Tuner, einem DVB-C-Tuner und einem DVB-S-Tuner.
